# EUROPEAN PATENT SPECIFICATION

(11) **EP 4 693 186 B1**
(45) Date of publication and mention of the grant of the patent: **08.07.2026**
(21) Application number: 24193845.5
(22) Date of filing: 09.08.2024
(51) Int. Cl.: G06T 7/521

(54) **DETERMINATION OF TRANSFORM WITH DE-SKEWING EFFECT ON 3D IMAGE DATA FROM SCANNING BY A 3D IMAGING SYSTEM**
BESTIMMUNG EINER TRANSFORMATION MIT ENTZERRUNGSEFFEKT AUF 3D-BILDDATEN AUS DER ABTASTUNG DURCH EIN 3D-BILDGEBUNGSSYSTEM
DÉTERMINATION D'UNE TRANSFORMÉE AVEC UN EFFET DE RÉALIGNEMENT SUR DES DONNÉES D'IMAGE 3D PROVENANT D'UN BALAYAGE PAR UN SYSTÈME D'IMAGERIE 3D

(43) Date of publication of application: 11.02.2026
(73) Proprietor: Sick IVP AB, 583 30 Linköping (SE)
(72) Inventor: EDHAMMER, Jens, 587 34 Linköping (SE); MALMGREN, Christoffer, 587 34 Linköping (SE); RYDSTRÖM, Daniel, 582 47 Linköping (SE); MURHED, Anders, 582 46 Linköping (SE)
(74) Representative: Bergenstråhle & Partners AB

(56) References cited:
- STEINHAUSER DOMINIK ET AL: "Motion segmentation and scene classification from 3D LIDAR data", INTELLIGENT VEHICLES SYMPOSIUM, 2008 IEEE, 1 June 2008 (2008-06-01), Piscataway, NJ, USA, pages 398 - 403, XP093230213, ISBN: 978-1-4244-2568-6, DOI: 10.1109/IVS.2008.4621281
- HE LEI ET AL: "De-Skewing LiDAR Scan for Refinement of Local Mapping", SENSORS, vol. 20, no. 7, 1 January 2020 (2020-01-01), pages 1 - 20, XP093066821, DOI: 10.3390/s20071846

## Description

### TECHNICAL FIELD

Embodiments herein concern determination of a transform having a de-skewing effect on 3D image data resulting from scanning by a 3D imaging system, such as a machine vision system based on light triangulation.

### BACKGROUND

Industrial vision cameras and systems for factory and logistic automation may be based on three-dimensional (3D) machine vision, where 3D-images are captured, such as of an object. By 3D-images it is referred to images that comprise also "height", or "depth", information and not, or at least not only, information, such as intensity and/or color, regarding pixels in only two-dimensions (2D) as in a conventional image.

In general, each pixel of an image captured by a camera has a position in image sensor coordinates that corresponds to a position of what the camera and image sensor imaged in the real world, or more particularly, information about light from a position in the real world that was sensed by image sensing element(s) of the image sensor and which image sensing element(s) correspond to a pixel. Typically it is reflected light from what is being imaged, for example of an object, that is being sensed. Depending on camera and system, what light is used, and how illumination by the light is provided, the sensed light may contain various information about the position that reflected the light, such as about position on an object being imaged. Thus, a pixel of the captured image has a position in image sensor coordinates that correspond to a position in the real world, such as a position on an object. The sensed light may contain also additional information about the position, such as relating to its intensity, color, reflectivity etc.

Many 3D machine vision cameras or systems, or in general 3D imaging systems, for 3D imaging, such as imaging of objects, are based on multiple 2D images being captured by an image sensor of a camera, typically sequentially during a scan of the object. Each such 2D image may contain 3D information regarding a 2D profile of the object and thus the total of such 2D images may contain 3D information about the whole object and a 3D image of the whole object may be formed from this. The 3D image may be represented by a "point cloud" where respective point corresponds to a position on the object and is associated with coordinates in 3D regarding that point. Respective point may also be associated with further information about the point, for example color or other characteristics associated with the corresponding object point.

When a pixel has a 3D position instead of "only" a position in 2D, it may be named voxel.

Line scan image data results when image data of an image is scanned or provided one line at a time, typically by scanning an object to be imaged using a light plane projected as a light line on the object and measuring reflected light from the object.

A special case of 3-D imaging by scanning is 3D imaging based on light triangulation, where structured light, typically a light plane, or "sheet of light", is used, and an object scanned through and/or by this light plane. A light line is projected on the object during the scan, corresponding to where said sheet or plane intersects with the object. Laser is often preferred but also other light sources able to provide structured light such as a light plane may be used, e.g. light sources able to provide light that stays focused and do not spread out too much, for example light provided by a laser or Light Emitting Diode (LED). Instead of a light plane corresponding to a "sheet of light", for example, a light plane corresponding to an edge of illumination, that is, a light edge, may be used.

3D machine vision systems are often based on light triangulation. In such a system there is a light source illuminating the object with structured light, such as a specific light pattern, typically a light plane as mentioned above. This kind of 3D machine vision systems or devices may be referred to as systems or devices for 3D imaging based on light, or light plane, triangulation, or simply laser triangulation when laser light is used. A light line projected on the object and is imaged by a camera, that is, the light reflected from the object is imaged. Along the light line, 3D characteristics is captured through the light triangulation, corresponding to a profile of the object with height information. By scanning the whole object like this, corresponding to a line scan, and involving movement of the line and/or object, 3D characteristics of the whole object can be captured, corresponding to multiple 2D profiles of the object and based on which a 3D image of the object can be formed as discussed above. To produce a profile image of the object during the scan, the reflected light from the object is captured by an image sensor of a camera, particularly intensity peaks thereof, are detected in the image data. The peaks occur at positions corresponding to locations on the object where the incident light, corresponding to said light line, was reflected from the object. The position in the image of a detected peak will map to a position on the object from where the light resulting in the peak was reflected in accordance with the light triangulation that the system is configured and has been setup to perform.

3D imaging systems based on scanning, such as 3D imaging system based on light triangulation, often introduce a skewing effect. In a 3D imaging system based on light triangulation and that are using a light plane for the scanning, this happen if the scan direction, for example travel direction of object, is not orthogonal to the light plane. As a result, a scanned object and 3D image of the object, that is imaged object, may look skewed compared to the real object For some system setups, for example having certain mounting position of measuring units with camera etc., there are no or minimal skewing effect. However, in general scanning of an object results or may be assumed to result in a skewing effect and that should be removed or least reduced.

When a skewing effect is present, some correction thereof, corresponding to a de-skew, should be performed.

The skewing effect corresponds to that a scan of a real world object results in a non-orthogonal coordinate system for the 3D image data. When visualizing the 3D image data and thereby the scanned object in an conventional orthogonal coordinate system, the imaged object looks skewed.

In other words, de-skewing the 3D image data corresponds to transforming the non-orthogonal coordinate system into a orthogonal one, or at least closer to such coordinate system. To de-skew the 3D image data a transform may be determined and then be applied to the 3D image data, corresponding to making the non-orthogonal coordinate system less non-orthogonal, preferably orthogonal. The transform may be referred to as a de-skew, or skew, transform. In principle the de-skew is accomplished by a an opposite skew to the skew resulting from the scanning.

The skew effect can be described by projection on one or two axes that can be modelled using the angle of the sheet of light relative the movement direction. These angles correspond to how much one or two axes of the non-orthogonal coordinate system is/are skewed compared to corresponding orthogonal axis/axes and thus how much it/they should be corrected to become orthogonal. Each angle may thus be considered to correspond to an angular offset in relation to a respective orthogonal direction.

The de-skew transform may thus be explained as a transform that removes or reduces the angular offset(s) and thereby removes or reduces the skew effect for the image data.

Further, with the transform determined and thus known, other operations that may be desirable, or sometimes even required, to be performed on the image data, become simpler, for example multi-camera alignment.

To determine the transform, conventionally, a predetermined object with point reference features are being used and is scanned. The object and point reference features have known geometries and dimensions and it is known how they relate to each other on the object and thus in the real world. The imaged point reference features are then identified in the resulting image data from the scanning. Based on how the imaged point features relate to each other vs. how they relate to their counterparts, that is, the point reference features on the real object in the real world, the transform can be determined.

US2022290978A1 discloses a solution based on this approach.

However, a conventional approach based on point features of a target object typically have problems with accurate capturing of the point features, identification of them in the image data and/or there may be mismatches between them during estimation, whereby a transform determined based on these may not provide a sufficient de-skew effect.

Steinhauser Dominik ET AL: "Motion segmentation and scene classification from 3D LIDAR data", Intelligent Vehicles Symposium, 2008 IEEE, discloses a hierarchical data segmentation method from a 3D high-definition LIDAR laser scanner for cognitive scene analysis in context of outdoor vehicles. The system abstracts raw information from a parallel laser system and extracts essential information about drivable road segments in the vicinity of the vehicle and clusters the surrounding scene into point clouds representing static and dynamic objects.

### SUMMARY

In view of the above, an object of the invention is to provide one or more improvements or alternatives to the prior art, such as to provide one or more improvements or alternatives regarding determination of a transform having a de-skewing effect on 3D image data.

According to a first aspect of embodiments herein, the object is achieved by a computer implemented method for determining a transform having a de-skewing effect on 3D image data resulting from scanning by a 3D imaging system, such as based on light triangulation. It is obtained 3D image data resulting from scanning by the 3D imaging system of planar real surfaces that at least during the scanning were non-parallel and with constant one or more angular relationships between each other. As a result, said 3D image data comprises planar imaged surfaces corresponding to said planar real surfaces. The planar imaged surfaces are detected in the 3D image data. The transform is determined based on the detected planar imaged surfaces and said one or more angular relationships between the planar real surfaces, such that the transform, when applied to a description of the detected imaged surfaces in coordinates of said 3D data, results in that angular relationships between the detected imaged surfaces match said angular relationships between the planar real surfaces. The determining of the transform comprises obtaining an adjustable transform for operation on input 3D image data coordinates and thereby transform them to output 3D image data coordinates, wherein adjustment of the transform results in change of a de-skewing effect provided by the transform, and iteratively applying the transform on the detected planar imaged surfaces described in the coordinate system of said 3D image data and adjusting the transform until said match occurs.

According to a second aspect of embodiments herein, the object is achieved by one or more devices, i.e. device(s), for determining a transform having a de-skewing effect on 3D image data resulting from scanning by a 3D imaging system, such as based on light triangulation. Said device(s) is configured to obtain 3D image data resulting from scanning by the 3D imaging system of planar real surfaces that at least during the scanning were non-parallel and with constant one or more angular relationships between each other. As a result, said 3D image data will comprises planar imaged surfaces corresponding to said planar real surfaces. Said device(s) is further configured to detect the planar imaged surfaces in the 3D image data. Moreover, said device(s) is configured to determine the transform based on the detected planar imaged surfaces and said one or more angular relationships between the planar real surfaces, such that the transform, when applied to a description of the detected imaged surfaces in coordinates of said 3D data, results in that angular relationships between the detected imaged surfaces match said angular relationships between the planar real surfaces. The device(s) is configured for the determining by obtaining an adjustable transform for operation on input 3D image data coordinates and thereby transform them to output 3D image data coordinates, wherein adjustment of the transform results in change of a de-skewing effect provided by the transform, and iteratively applying the transform on the detected planar imaged surfaces described in the coordinate system of said 3D image data and adjusting the transform until said match occurs.

According to a third aspect of embodiments herein, the object is achieved by one or more computer programs comprising instructions that when executed by one or more processors causes one or more devices to perform the method according to the first aspect.

According to a fourth aspect of embodiments herein, the object is achieved by a carrier comprising the computer program according to the third aspect.

Thanks to embodiments herein, it can be avoided to use multiple point reference features in 3D as in the conventional case and thus related problems as mentioned in the Background can be avoided as well.

In addition, embodiments herein allow position and rotation invariance with respect to the placement of the set of planar real surfaces. Only fixed relative angular relationship of the planar real surfaces needs to be known, corresponding to said constant one or more angular relationships between the planar real surfaces during the scanning.

Further, owing to embodiments herein, also scale invariance is enabled. A simple object having the planar real surfaces can be used. Such object can be provided at different scales for differently sized fields of view, and the same algorithms will work the same way without any change in parametrization as conventionally would be needed with point reference features.

Moreover, embodiments herein enable algorithms for detection and computations regarding the surfaces to be simpler than in the conventional case with point reference features. Plane estimations are in general simpler than sphere or cone fittings that typically are used in the conventional case.

Furthermore, embodiments herein enable more robust estimation than in the conventional case. For example, compared to for example fitting cones or similar to thereby estimate the cones to find point reference features corresponding to the cone apexes, embodiments herein can use plane fittings to estimate the planar imaged surfaces, which can take a lot more data, corresponding to points forming respective surface, into consideration and thereby result in more robust results.

Hence, embodiments herein provide improvements over the prior art.

### BRIEF DESCRIPTION OF THE DRAWINGS

Examples of embodiments herein are described in more detail with reference to the appended schematic drawings, which are briefly described in the following.
Figure 1 schematically illustrates an example of a prior art type of 3D imaging system based on light triangulation.
Figures 2A-D are schematic drawings for visualizing, exemplifying and explaining the skewing effect.
Figures 3A-B are schematic drawings for visualizing, exemplifying and explaining the principle and idea behind embodiments herein.
Figures 4-5 are schematic drawings that exemplify and visualize two real objects that may be used to provide 3D image data for embodiments herein.
Figure 6 schematically illustrates an example of a 3D imaging system that may be used with and/or be configured to carry out embodiments herein.
Figure 7 is a flowchart for schematically illustrating embodiments of a method according to embodiments herein.
Figures 8A-B show examples from reality without and without application of a transform determined according to embodiments herein.
Figure 9 is a schematic block diagram for illustrating embodiments of how one or more devices may be configured to perform the method and actions discussed in relation to Figure 7.
Figure 10 is a schematic drawing illustrating some embodiments relating to computer program and carriers thereof.

### DETAILED DESCRIPTION

Embodiments herein are exemplary embodiments. It should be noted that these embodiments are not necessarily mutually exclusive. Components from one embodiment may be tacitly assumed to be present in another embodiment and it will be obvious to a person skilled in the art how those components may be used in the other exemplary embodiments.

To enable better understanding of relevant technology and as a development towards embodiments herein, the prior art situation and problems indicated above in the Background will be further elaborated upon before embodiments herein are described.

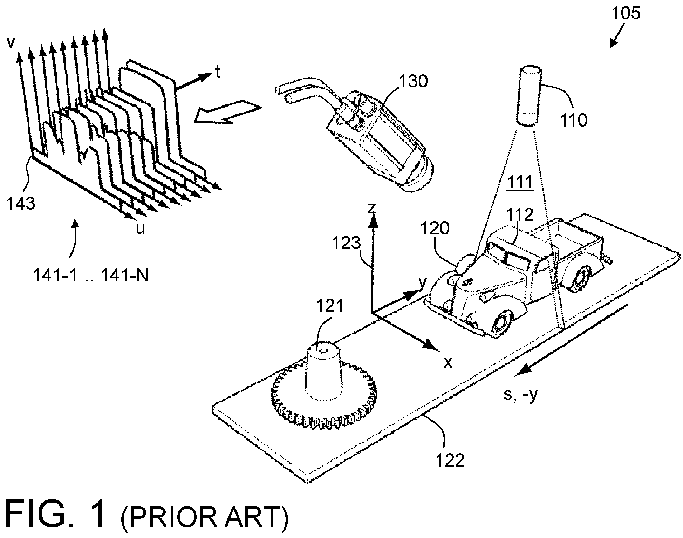

**Figure 1** schematically illustrates an example of an imaging system 105, for 3D machine vision, or simply 3D imaging, based on light triangulation, as mentioned in the Background. The system may be referred to as a machine vision system. The imaging system 105 is in the figure shown in a situation of normal operation. The imaging system 105 is example of a system that embodiments herein may be used and applied in relation to as will be explained further below. The system 105 is configured to perform light triangulation, here using a sheet of light, that is, a light plane 111. The system 105 further comprises a light source 110, for example a laser, for illuminating measure objects to be imaged with a specific light pattern, in the figure exemplified and illustrated as the light plane 111. The light may, but not need to be, laser light. In the shown example, the objects being imaged are exemplified by a first measure object 120 in the form of a car and a second measure object 121 in the form of a gear wheel construction. When the specific light pattern, here the light plane 111, is incident on an object, this corresponds to a projection of the light plane 111 on the object, which may be viewed upon as the light plane 111 intersects the object. For example, in the shown example, the light plane 111 results in a light line 112 on the first measure object 120. The light plane 111 incident on the object is reflected by the object, more specifically by portions of the object at the intersection, i.e. at the light line 112 in the shown example. The system 105 further comprises a camera 130 comprising an image sensor (not shown in Figure 1). The camera and image sensor are arranged in relation to the light source 110 and the objects to be imaged so that the light plane 111, when reflected, become incident light on the image sensor. The image sensor, typically implemented as a chip, is for converting incident light to image data. Said portions of the object, which by reflection causes said incident light on the image sensor, are thereby be captured by the camera 130 and the image sensor, and corresponding image data may be produced and provided for further use. For example, in the shown example, the light plane 111 will, at the light line 112 on a portion of the car roof of the first measure object 120, be reflected towards the camera 130 and image sensor, which thereby may produce and provide image data with information about said portion of the car roof. With knowledge of the setup, including the geometry, of the system 105, e.g. how image sensor coordinates relate to real world coordinates, such as coordinates of a coordinate system 123, e.g. Cartesian, relevant for the object being imaged and its context, the image data may be converted to information on 3D characteristics, e.g. a 3D shape or profile, of the object being imaged in a suitable format. The information on said 3D characteristics, e.g. said 3D shape(s) or profile(s), may comprise data describing 3D characteristics in any suitable format.

By moving e.g. the light source 110 and/or the object to be imaged, such as the first measure object 120 or the second object 121, so that multiple portions of the object are illuminated and cause reflected light upon the image sensor, in practice, typically by scanning the objects, image data describing a more complete 3D shape of the object may be produced, e.g. corresponding to multiple, consecutive, profiles of the object, such as the shown profile images 141-1 - 141-N of the first measure object 120, where respective profile image shows a contour of the first object 120 where the light plane 111 was reflected when the image sensor of the camera 130 sensed the light resulting in the respective profile image. As indicated in the figure, a conveyor belt 122 or similar may be used to move the objects through the light plane 111, with the light source 110 and the camera unit 130 typically stationary, or the light plane 111 and/or the camera 130 may be moved over the object, so that all portions of the object, or at least all portions facing the light source 110, are illuminated and the camera 130 can receive light reflected from different parts of the object desirable to image.

As understood from the above, an image frame provided by the camera 130 and its image sensor, e.g. imaging the first measure object 120, may result in any one of the profile images 141-1 - 141-N. As mentioned in the Background, each position of the contour of the first object shown in any of the profile images 141-1 - 141-N are typically determined based on identification of intensity peaks in image data captured by the image sensor and on finding the positions of these intensity peaks, e.g. by means of one or more intensity peak finding algorithms. The system 105 and conventional peak finding algorithms are typically configured to, in each image frame, search for an intensity peak per pixel column. Sensor coordinates are u, v as indicted in the figure. The u-axis may be along image sensor rows and u may be used to indicate a position in such row, e.g. corresponding to an image sensor column. Correspondingly, the v-axis may be along image sensor columns and be used to indicate a position in such column, e.g. corresponding to an image sensor row.

For each position u of an image frame it may be searched for a peak position along v, e.g. by means of a peak finding algorithm as mentioned above, and the identified peaks in an image frame may result in one the profile images 141-1 - 141-N as shown in the figure. The profile images are formed by image points in a sensor based coordinate system 143, such as u, v, t. The total of image frames and profile images can be used to create a 3D image of the first object 120.

Calibration may be used to more accurately find out about how the image sensor coordinates relate to real world coordinates for the system, for example after the system has been setup at the location for its use. A particular, typically predetermined, object is typically used for calibration, that is, a calibration object. The calibration object has certain known features, measure etc., and is scanned by the system for calibration purpose. Knowledge and information about the object and from the scan of the calibration object are used to calibrate the system to thereafter be able to more accurately provide 3D image data for scanned objects. Objects that are scanned as part of the what is the normal, intended, use and operation of the system, such as to image and measure objects as shown in the figure, may be referred to as production or measure objects in contrast to calibration objects. De-skewing as discussed in the Background may be part of a general calibration procedure or may be separate from calibration performed for other reasons than (de)skewing.

The skewing discussed in the Background for example occurs in case the scan direction s is not orthogonal to the light plane 111, that is, if it the scan direction s would deviate from the -y direction in the figure, where the light plane 111 is in the z-x plane. Such deviation may be on purpose, for example if the system and/or setup of the system is made in a way to provide some benefits, for example to extract certain information about the object, and that requires, or benefits, from that the scan direction is non-orthogonal to the light plane 111. Alternatively or additionally there may be some deviation due to that the setup of the system was not perfect, or not made sufficiently accurate, so that this resulted in some non-negligible offset from what should be the case, such as an offset from an orthogonal relation or from what an earlier calibration regarding skew requires. In both cases it is desirable to be able to remove or reduce the skewing effect, for example by using a transform, such as mentioned in the Background, with a de-skewing effect on the resulting 3D image data. The transform is applied after peak detection and typically on 3D image data for several profiles, corresponding to a "point cloud", height map or depth map, that may result from scanning of a whole object or is available after a certain period of time during which image data for a number of profiles have been provided by the system

It should be realized that the scan direction may be non-orthogonal to the light plane 111 in any direction s parallel to the x-y plane and non-orthogonal to the x-axis, and/or in any direction s parallel to the z-y plane and non-orthogonal to the x-axis. From the figure it can be understood that this can be described as a sheared coordinate system that in relation to the shown x, y, z coordinate system is sheared so that a new coordinate system, say x', y', z' will have the y' direction along the scan direction s and the x' and/or z' will be non-orthogonal vs. y'. Respective non-orthogonal axis of the sheared coordinate system x', y', z' can be seen as "offset" by a respective angle from orthogonality. The skew effect follows from that sampling during scanning is performed in such sheared coordinate system. De-skewing corresponds to transforming the (skewed) 3D data from the scanning, that hence are in sheared coordinate system, into an orthogonal coordinate system. As should be realized, said one or two angles can be used for this and thus be used to determine a suitable transform for de-skew. However, these angles are in general not known.

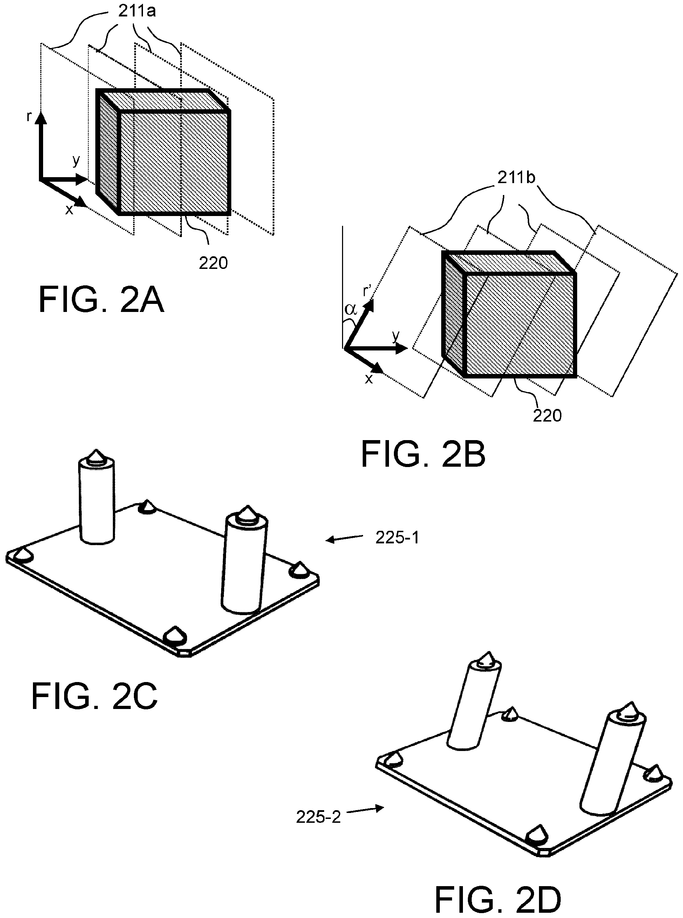

**Figures 2A-D** are schematic drawings that will be used to visualize, exemplify and explain the skewing effect.

Figures 2A-B respectively shows situations for a cubic object 220 with no skewing and with skewing effect, respectively. Here it is assumed that a light plane used in the scanning is in a r-x plane or r'-x plane, and that the object 220 is scanned in the y-direction. In respective figure, parallel finely dotted squares schematically indicate how the light plane will "sample" the profile of the cube 220 during the scan, that is, this exemplifies how profiles of the cube 220 will be captured. In Figure 2A there is a light plane 211a (in the r-x plane) that is orthogonal to the scan direction (y) and there is no skewing effect. In Figure 2B on the other hand, there is a light plane 211b (in a r'-x plane) that is non-orthogonal to the scan direction (y) and there will be a skewing effect. More particularly, in Figure 2B the light plane (in the r'-x plane ) is tilted in relation to the scan direction (y) corresponding to that the light plane (in the r-x plane) orthogonal to the scan direction (y) as in Figure 2A would have been rotated around the x-axis with a certain angle α resulting in r' instead of r. The coordinate system x,y,r' thus corresponds to a sheared coordinate system as mentioned above.

The skewing effect can be realized from how the finely dotted indications of how the light plane 211b will "sample" the profile of the cube 220 during the scan in comparison with the light plane 211a.

Figures 2C-D schematically and respectively shows resulting 3D images of one of the same object if the object would have been imaged instead of the cube 220 in accordance with the setups of Figures 2A-B. Figure 2C shows an imaged object 225-1 that resembles the actual real object that was "sampled" by the light plane 211a instead of the object 220 in the scan direction y. There is no skewing effect visible for the imaged object 225-1. Figure 2D on the other hand shows an imaged object 225-2 with a clearly visible skewing effect. The imaged object is a result from the actual object "sampled" by the light plane 211a instead of the object 220 in the scan direction y. The actual object scanned to result in the imaged objects 225-1, 225-2 is an example of an object as mentioned in the Background with point reference feature and that may be used for calibration and to use information from the calibration to, as in the prior art, determine a transform to remove or reduce the skewing effect from the 3D image data.

Embodiments herein, on the other hand, are based on an insight that there is no need to use point reference features but that it instead can be used planar surfaces of a real object with known angular relationship(s) between the surfaces. The planar surfaces will be imaged as planar imaged surfaces also in case of skewing. After the scan of the real object, the planar imaged surfaces are detected in the resulting 3D image data instead of point reference features as conventionally would be the case, and the angular relationship between the image surfaces can be found out from this, by for example fitting a plane to respective detected surface and compute the angular relationships(s) based on that. The detected imaged surfaces are preferably described by their normals, respectively, which makes it possible to simply and with little data describe each surface and it may also simplify computations. A de-skew transform is then determined, such as estimated. This may be done on in a similar way as in the prior art, for example by applying and testing an adjustable transform in an iterative manner, such as by using a non-linear solver until a transform has been found that according to the test provides a sufficient de-skew effect. However, in the prior art this is done based on and using point reference features, real point reference features on the real object and imaged point reference features affected by the transform. Embodiments herein are instead based on looking at how the adjusted transform when it is applied affects the angular relationships between the planar imaged surface and that for a de-skew effect should become the same or at least be close to the corresponding angular relationships of the real object. That is, the angular relationship(s) between the imaged surfaces after the transform are compared with the corresponding known angular relationship(s) between the real planar surfaces of the real object.

Preferably it is used a real object having at least three planar non-parallel surfaces, with three surfaces having said angular relationships between them. This since three planar surfaces can provide sufficient information regarding skew in any occurring skew direction, as discussed above. Using three surfaces can thus provide more generally useful information. It may suffice with two surfaces in some situations with skew, but two surfaces can only provide information regarding skew in one dimension, but this is insufficient for some cases that may occur since the skew effect can be present in two different dimensions at the same time.

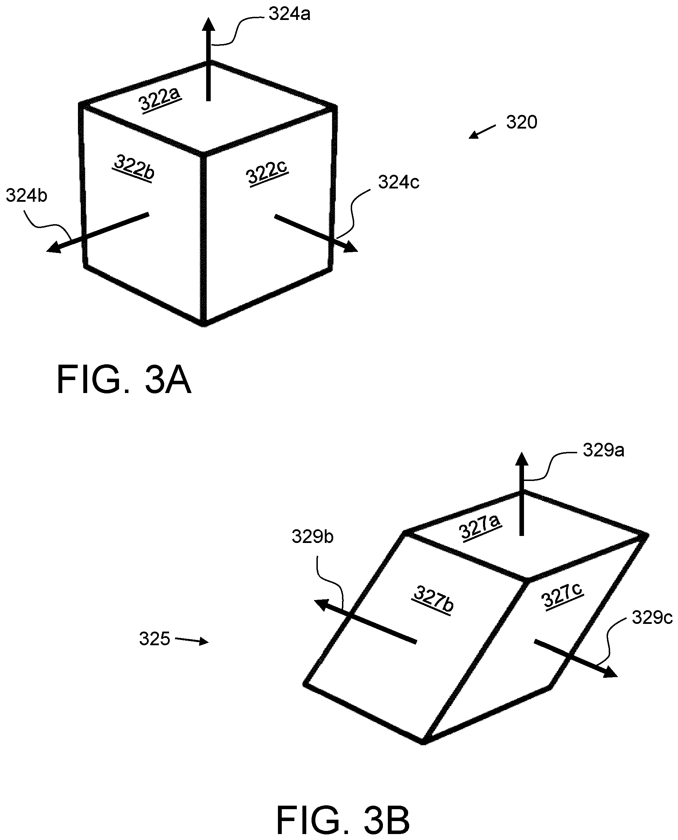

**Figures 3A-B** are schematic drawings that will be used to visualize, exemplify and explain the principle and idea behind embodiments herein. Figure 3A schematically shows a real object 320 being a cube that will be scanned by a 3D imaging system according to a certain setup that results in a skewing effect. The real object 320 is a known, for example predetermined, object with planar surfaces 322a-c and known angular relationship(s) between these surfaces, in case of a cube as in this example thus 90-degrees. Each planar surface 322a;b;c may be described by and represented by its normal 324a;b;c, for example represented by a respective vector. Two surfaces being 90 degrees in relation to each other for example means the scalar product between the normal vectors of the surfaces is zero. Also in cases of planar surface with angular relationships(s) that are not zero, the angular relationship(s) corresponds to how the normals relate to each other. Figure 3B schematically shows an imaged object 325 based on 3D image data from the scanning of the real object 320 with said skewing. As can be seen in the example, the result is that the imaged object 325 corresponds to a skewed version of the cube that is the real object 320. Still, there are present imaged planar surfaces 327a;b;c that correspond to the real planar surfaces 322a;b;c of the real object 320. These can be detected in the 3D image data that corresponds to the imaged object 325. Planes can be fitted to the aimed planar surfaces 327a-c and normals 329a-c thereof may be determined. The angular relationships between the real planar surfaces 322a-c of the real object 320 can then be compared with the corresponding angular relationships between the corresponding planar imaged surfaces 327a-c, for example using the normals 329a-c. As already indicted above, an adjustable transform may be applied and be adjusted until the result is that the angular relationships of the imaged surfaces 327a-c become preferably the same as, or at least desirable close or closer to, the corresponding angular relationships of the planar surfaces 322a-c of the real object 310. This means that the transform will have a de-skewing effect, also if it is later applied on other imaged objects scanned by the same imaging system and setup.

Although a simple cube as in the example above suffice, the principle of course works also with other shaped real objects having planar surfaces some which may be more advantageous to use in practice and in certain situations. As already mentioned above, preferably a real object with at least 3 non parallel planar surfaces should be used since at least two angles may be needed to described the skew in 3D as is the case for the 3D image data. In general, for N angles, at least N+1 surfaces are needed.

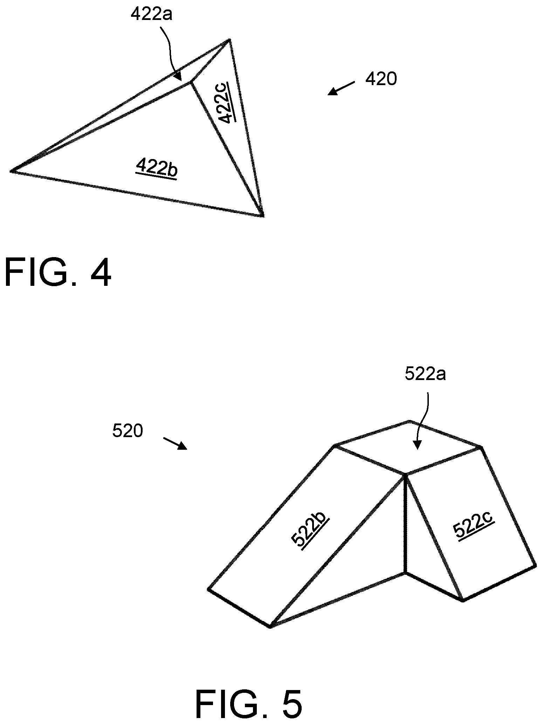

**Figures 4-5** are schematic drawings that exemplify and visualize two further real objects that may be used to provide 3D image data for embodiments herein.

Figure 4 shows a real object 420 that corresponds to a corner of a cube and has three planar real surfaces 422a-c. It is realized that a corner of a cube contain three surfaces and is sufficient to provide information about angular relationships that correspond to two skew angles. Also, a corner of a cube take little space and has less risk than a complete cube to be placed in a way so that the scan will sample a surface of the cube poorly.

Figure 5 shows a real object 520 that has three planar real surfaces 522a-c that have angular relationships that are less than 90 degrees. This may be advantageous since in some imaging system setups it can be difficult to get good sampling of three surfaces with 90-degree angular relationships because this requires that both light and camera can illuminate and view respective surfaces at the same time. This may be easier if the angular relationships are less than 90 degrees. However, if the surfaces can be sampled sufficiently well there are advantages with large difference in angular relationship between the surfaces, such as 90 or close to 90 degrees, and disadvantages if the difference is too or very small, such as close to 0 degrees. A greater angular difference typically leads to clearer distinction between surfaces and better numerical stability for solutions based on embodiments herein, which may facilitate to more accurately determine the transform

Further, the real object 420b is non-symmetrical, that is, asymmetrical, which is advantageous since this can be used to make sure that imaged surfaces are not mixed up and it can be used to detect a mirrored system setup. Correcting for mirroring can have benefits in certain applications, such as reading text. By this method a correctly oriented and orthogonal coordinate system can be ensured.

Note that it in principle is not needed to be a single real object having the non-parallel planar real surface, it is sufficient with real surfaces having known angular relationship to each other. One could for example contemplate that a support surface for objects to be scanned, for example conveyor belt as mentioned above, could be scanned and during the scan be adjusted so it during the scan will be scanned while having two or more different angular relationships capturing several profile images of each. This may be accomplished by tilting the support surface. The resulting 3D data will them contain imaged planar surfaces of a virtual imaged object formed from scan and contain imaged planar surfaces corresponding to the support surface with the different tilts. This would for example enable a system that for a certain setup can "self-calibrate" at least regarding skew and remove or reduce the skew effect automatically. However, for simplicity and robustness, using a separate single object is likely preferred in most practical situations.

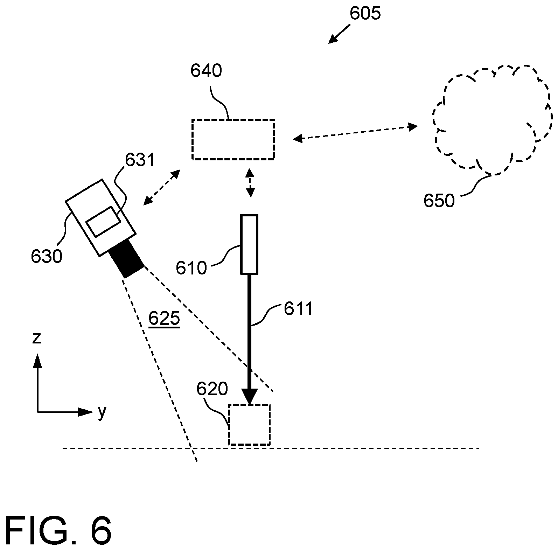

**Figure 6** schematically illustrates an example of a 3D imaging system 605 that may be used with and/or be configured to carry out embodiments herein. The system is for 3D imaging of object(s) based on scanning, more particularly the shown system is based on light triangulation. The imaging system 605, how profile images are captured from scanning, the light triangulation, peak detection and how 3D image data corresponding to a 3D image of a scanned object can be formed, etc. may be as in the prior art and in this respect the imaging system 605 may correspond to the imaging system 105 described above. Hence, the imaging system 605 correspondingly comprises a camera 630 with an image sensor 631, a light source 610 for illuminating an object to be imaged with a specific light pattern, such as a light plane 611. An object to be imaged is illuminated by the light plane 611 in a field of view 625 of the camera 630. Such object is schematically exemplified as a real object 620 in the figure. The real object 620 may for embodiments herein for example be any of the real objects 320, 420, 520 as discussed above, or it can be any other real object or objects that during scanning and provision of 3D image data has/have planar real surfaces that are non-parallel and with one or more constant angular relationships between each other.

The camera 630 may further comprise one or more processors memory etc., in addition to the image sensor 631 and/or the image sensor 631 may have some integrated processing capabilities itself. There is of course typically also input and/or output interfaces etc., such as for control of the camera 630 and/or input and/or output of information, such as captured image(s) and/or information extracted from captured images, 3D image data based on found peaks etc. The one or more processors may be used to integrate capabilities same or similar to a computer in the camera, that is in the same unit, making it more autonomous and able to perform more processing and/or control of its own. That is, without the need for further and/or separate unit(s), such as a separate computer, to get corresponding function and/or to be able to, for example, enable simple setup process and/or quicker processing owing to a reduced need to communicate between separate units. In such case the camera 630 may alone perform embodiments herein as described below. In some embodiments, the system 605 corresponds to the camera 630, that is, the system 605 may be in the form of, or be implemented as, a single unit that is, corresponds to, or at least resembles, a camera and contain camera functionality. Also network capabilities, light sources etc. may be integrated in such unit.

However, in some embodiments the camera 630 is a camera unit with only more conventional image specific capabilities, for example in addition to the imaging where the image sensor 631 is involved, some image processing capabilities regarding for example single images and peak detection may be in the camera 630. The camera 630 may be connected to one or more other parts of the system, such a computing device 640 as exemplified in the figure, that have further processing capabilities. The computing device 640 may be configured to control camera 630 and other parts, if any, of the system 605 and/or be configured to perform embodiments herein, for example based on 3D image data resulting from image data captured by the camera during scan of the real object 620 and on input information regarding angular relationships between planar real surfaces of the real object 620. The computing device 640 may receive 3D image data corresponding to profile images of the real object 620 from the camera 630. The computing device 640 may comprise one or more processors, memory etc. and may correspond to a computer. To illustrate that computing capabilities etc. to perform embodiments herein alternatively or additionally may be remote in time and/or space from where the scanning is performed, the figure also show a schematic computer cloud 650, representing one or more servers or remote computers. These may be part of the system 605 or separate from it but configured to operate on 3D image data from the imaging system 605 or similar system and using information regarding angular relationships between planar real surfaces that was scanned by the system to provide the 3D image data. Embodiments herein may thus for example be performed as a computer cloud service and/or remotely on one or more servers that may be communicatively connected to the imaging system 605.

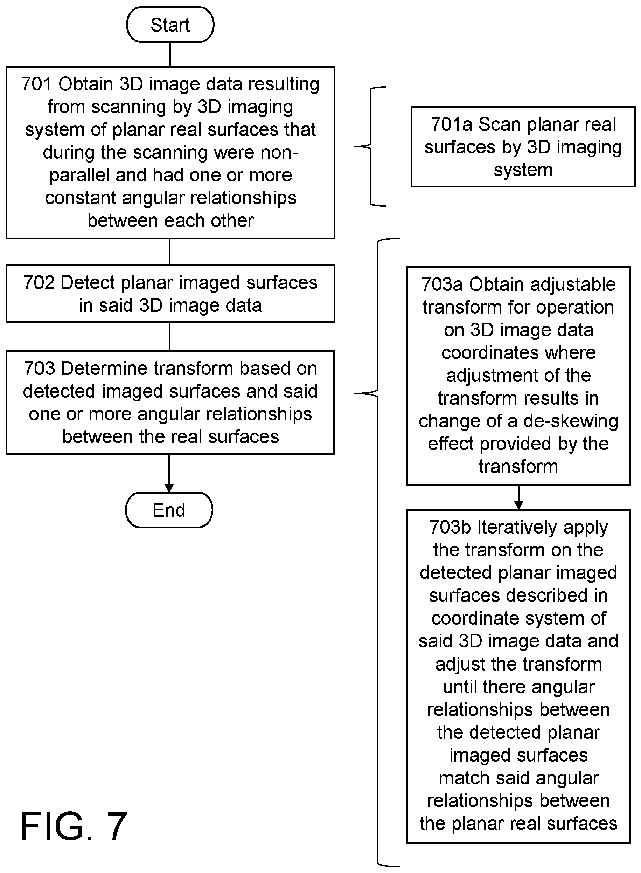

**Figure 7** is a flowchart for schematically illustrating embodiments of a method according to some embodiments herein. The actions below, which may form the method, are for determining a transform having a de-skewing effect on 3D image data resulting from scanning by a 3D imaging system that may be based on light triangulation, such as the 3D imaging system 605 that will be used as an example of the 3D imaging system in the following.

The method and/or actions below and indicated in Figure 7 may be performed by device(s), i.e. one or more devices, such as the 3D imaging system 605, or some device(s) part thereof or external from the system, for example the camera 630 and/or the computing device 640 and/or the computer cloud 650. Device(s) for performing the method and actions thereof are also described below in some further detail.

The actions below may be taken in any suitable order and/or be carried out fully or partly overlapping in time when this is possible and suitable.

### Action 701

It is obtained 3D image data resulting from scanning by the 3D imaging system 505 of planar real surfaces that at least, fully or partly, during the scanning were non-parallel with constant, or in other words fixed, one or more angular relationships between each other, whereby said 3D image data comprises imaged planar surfaces corresponding to said real planar surfaces. Examples of the planar real surfaces are the planar real surfaces 322a-c; 422a-c; 522a-c, where the planar real surfaces 322a-c will be primarily used as example in the following. An example of the imaged surfaces are the imaged surfaces 327a-c that will be used as example in the following. It should be understood that constant during the scanning is this context mean constant so that the scanning is able to sufficiently sample, or in other words capture sufficiently many profile images of, respective planar real surface to form its corresponding planar imaged surface.

As already mentioned above, a real surface that is planar and scanned will result in a planar imaged surface also when a skewing effect is present, but angular relationships between such surfaces will be affected.

Said planar real surfaces are preferably in a fix relation to each other during the whole scan, for example by being part of one and the same object that does not change.

Alternatively the planar real surfaces may be parts of different objects but that at least during the scan are in a fix relation to each other, for example could one surface correspond to a support surface for object being scanned and the other one or more correspond to a surface of an object.

Note that, as already discussed separately above, in some special embodiments even the same physical surface can be adjusted during scan to accomplish two or more of the planar real surfaces that are non-parallel with constant angular relationship between each other during the scanning, in that case during part of the scan.

The planar real surfaces and their relation to each other, and thus their one or more angular relationships are preferably predetermined and thus known in advance at the time of the scanning, although the real surfaces and the angular relationships between them alternatively may be determined, such as measured, for example after the scanning.

When a particular object or objects with the planar real surfaces are used, it/they is/are preferably predetermined, with predetermined real surfaces and angular relationship(s), and may be referred to as calibration object(s). Note that such an object may be only for skew purposes or may additionally contain features relating to other calibration, or there may be separate object(s) for the other calibration that fully o partly may be performed separately from embodiments herein.

It may be easier to accomplish planar real surfaces with predetermined and/or accurate angular relationships between each other if they are part of and can be manufactured as part of the same object. Hence, in some embodiments, said planar real surfaces, such as the planar real surfaces 322a-c, are part of one and the same real object, such as the real object 320. In some of these embodiments, the real object, for example the real object 520, is asymmetrical. Why this may be beneficial has also been discussed above.

### Action 701a

In some embodiments, for example when the method is performed by the 3D imaging system 605, the 3D image data is obtained by scanning the planar real surfaces by the 3D imaging system 605.

In other embodiments, where the method is performed by for example a single device, part of or external from the 3D imaging system 605, such device may obtain the 3D image data by receiving it from the 3D imaging system 605, typically the camera 630 thereof.

### Action 702

The planar imaged surfaces 327a-c are detected in the 3D image data. An imaged surface can from the can be captured by more samples and thus be described by more points in the 3D image data than an imaged point reference feature as in the mentioned prior art solutions. Detection of a planar imaged surface in 3D image data may thereby be more robust, simpler and/or enable a more accurate representation of its real counterpart than in case of a point refence feature.

The detected planar imaged surfaces are preferably described as planar surfaces in a coordinate system of said 3D image data.

The present action preferably comprises to fit a respective plane to the respective imaged surface, which may be done according to any known method for doing this, for example using a robust least squares method. The respective plane being fitted may thus be perfectly planar, that is, a perfect plane, and the fitting may involve minimizing median or average distance to the points forming respective imaged surface. Fitting of planes can thus be used to estimate the planar imaged surfaces and may be used both for detection and to enable provision of a simple description of respective imaged surface, for example by its normal, a plane equation or by any way a planar surface may be described. A respective normal of a respective planar imaged surface may be simply be described by a vector in the coordinate system of the 3D image data.

Note that alternatively to fitting a plane, respective planar imaged surface could be detected more directly by finding multiple points part of a planar surface in the 3D image data and then use them as representation of a thereby detected planar surface and/or use these points to form a description of the planar surface.

### Action 703

The transform is determined based on the detected planar imaged surfaces 327a-c and said one or more angular relationships between the planar real surfaces 322a-c, such that the transform, when applied to a description of the detected planar imaged surfaces 327a-c in coordinates of said 3D data, results in that angular relationships between the detected imaged surfaces 327a-c match said angular relationships between the planar real surfaces 322a-c. In other words, determine the transform so when it is used on the 3D image data, the angular relationships between planar imaged surfaces 327a-c will match the corresponding angular relationships between the planar real surfaces 322a-c that were imaged and resulted in the planar imaged surfaces 327a-c.

As already been indicated above, a realization that embodiments herein are based on, is that the detected planar imaged surfaces and the one or more angular relationships between the corresponding planar real surfaces, contain all information needed to be able to determine a de-skew transform. Thus without the need of using point reference features as in the prior art. The imaged surfaces will be planar also in case of skew and the transform can be determined by looking at and comparing the angular relationships between the imaged surfaces and the corresponding real surfaces.

What is required for the angular relationships between the detected planar imaged surfaces 327a-c to match said angular relationships between the planar real surfaces 322a-c may be according to one or more criteria that may be predetermined. Additionally or alternatively the match occurs when the angular relationships between the planar imaged surfaces 322a-c become the same as, and/or closer and/or sufficiently near, the angular relationships between the planar real surfaces 322a-c. The match should at least involve that the angular relationships between the planar imaged surfaces 322a-c from application by the transform have become closer to the corresponding angular relationships between the planar real surfaces, than without the transform being applied, and thus that the transform has provided some de-skewing effect.

The angular relationships correspond to and may be represented by angles between the involved planar surfaces but need not be expressed as or be represented by angles as such, other ways of representing the relationship are possible, for example by means of the normals of the surfaces and how the normals relate to each other, which contain information about the angles between the surfaces. This is of course the case for both the planar real surfaces and the detected planar imaged surfaces.

Determining the transform based on the detected planar imaged surfaces may correspond to, or comprise to, determine it based on, or using, a description of and/or representation of the detected planar imaged surfaces, for example using planes that have been fitted to said planar imaged surfaces and/or normals of the detected planar imaged surfaces, as discussed above. When normals are used, the match of the present action between the angular relationships of the imaged and real surfaces are typically based on these surfaces' normals, for example matching angles between the normals instead of directly between the surfaces, or matching how the normals relate to each other.

The determining of the transform may comprise testing one or several determined transform candidates until said match occur.

### Action 703a

In some embodiments, it is obtained an adjustable transform for operation on input 3D image data coordinates and thereby transform them into output 3D image data coordinates. The transform is adjustable so that adjustment of the transform results in change of a de-skewing effect provided by the transform.

In practice, the transform is able and adjustable to cause skew and this skew corresponds to a de-skew when the skew by the transform is opposite to, or in other cords counteract, skew present in the 3D image data. This has also been discussed above.

### Action 703b

In embodiments where Action 703a is performed, the transform is iteratively applied on the detected planar imaged surfaces 327a-c described in the coordinate system of said 3D image data and adjusted until said match occur.

The application of the transform on the detected planar image surfaces is typically on a description or representation of the detected surfaces as discussed above, for example on their normals.

Actions 703a-b correspond to a basic and typically preferred numerically based approach to determine the transform, where for example a suitable non-linear solver may be utilized and adapted for the purpose as already mentioned above.

In some embodiments, iteratively applying and adjusting the transform as in Actions 703a-b involves application of a non-linear solver on a function based on differences between respective angular relationship of the real surfaces and the transformed respective corresponding angular relationship between the imaged surfaces.

Finding the parameters for deskew can be done using a non-linear least squares solver and a suitable 3D transformation. For example, the Ceres Solver is one such solver and is available as open source for modeling and solving large, complicated optimization problems. Using an auto differentiated cost function can solve this and other similar types of optimization problems. For application in the present context, the Ceres Solver may be used to form a cost function that takes observed plane normals and directly minimizes the difference of the dot products between these observed normals and the expected dot products in the orthogonal, real world, coordinate system.

Using a non-linear solver is typically efficient and simple. However, also other methods may be used although they may require more computations, but which may not be problem in practice if there is sufficient computation power at hand. Basically, a simple iterative guessing based method could be used. For example, when a guess result in reduction of error, that is, have some de-skew effect, further guesses can be made closer to that guess.

As already indicated above, in some embodiments, for example part of the iterative numerical approach in accordance with Actions 703a-b, the planar real surfaces 322a-c and planar imaged surfaces 327a-c are represented by their normals, respectively, and respective angular relationship is represented by a respective relation between the normals of the surfaces that the respective angular relationship relate to. Simpler and more efficient computations are enabled by using the normal instead of for example plane equations or two or more vectors in respective plane.

An alternative to an iterative numerical approach in accordance with Actions 703a-b may be to analytically determine the transform.

Thanks to embodiments herein, such as described above in relation to Actions 701-703, it can be avoided to use multiple point reference features in 3D as in the conventional case and thus related problems as mentioned in the Background can be avoided as well.

In addition, embodiments herein allow position and rotation invariance with respect to the placement of the set of planar real surfaces. Only fixed relative angular relationship of the planar real surfaces needs to be known, corresponding to said constant one or more angular relationships between the planar real surfaces during the scanning.

Further, owing to embodiments herein, also scale invariance is enabled. A simple object having the planar real surfaces can be used, for example such objects as exemplified above. Such object can be provided at different scales for differently sized fields of view, and the same algorithms will work the same way without any change in parametrization as conventionally would be needed with point reference features.

Moreover, embodiments herein enable algorithms for detection and computations regarding the surfaces to be simpler than in the conventional case with pint reference features. Plane estimations are in general simpler than sphere or cone fittings that typically are used in the conventional case with point reference features.

Furthermore, embodiments herein enable more robust estimation than in the conventional case. For example, with reference to the objects of the skew example of Figure 2D, compared to fitting the cones and thereby estimating the cones and finding the point reference features corresponding to the cone apexes, embodiments herein can use plane fittings to estimate the planar imaged surfaces, which can take a lot more data, corresponding to points forming respective surface, into consideration and thereby result in more robust results.

Hence, embodiments herein provide improvements over the prior art.

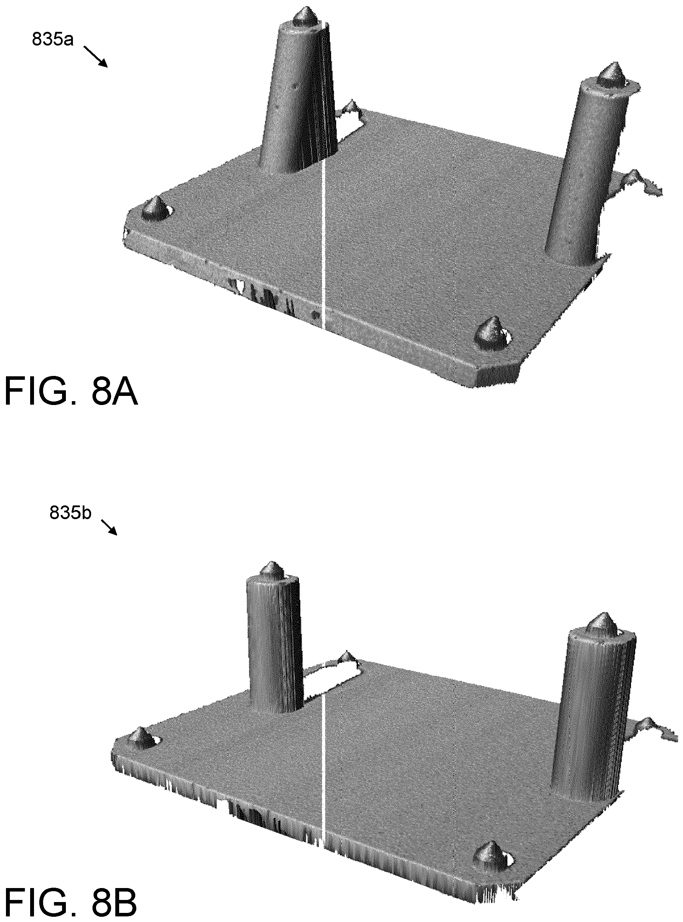

**Figures 8A-B** show examples from reality without and without application of a transform determined according to embodiments herein. Figure 8A shows a resulting first imaged object 835a resulting from scanning with skew effect of a real object, thus without application of embodiments herein. Figure 8B shows a resulting second imaged object 835b when the 3D image data that corresponds to the first imaged object 835a were transformed using a transform that was determined according to embodiments herein, whereby it had a de-skew effect on the 3D image data as can be seen from comparison of the figures. The second imaged object 835b corresponds to a de-skewed version of the first imaged object 835a.

The real object that was scanned and that resulted in the original 3D image data here visualized as the first imaged object 835a, was scanned by a system corresponding to the system 605 and in a way, as discusses above, so there would be a skew effect, such as scanned as the real object 220 in Figure 2B. However, the real object behind what is shown in Figures 8A-B is the same real object that was scanned to result in the the schematic example of Figure 2D since the skew effect is clearly visible for such object. As mentioned above, this object is one with point reference features that conventionally are used to determine a de-skew transform, however, note the real object used for Figures 8A-B object is used just fore visualizing skew and de-skew with and without the use of embodiments herein, but not used in any determination of the de-skew transform. The transform that was used and resulted in the de-skew effect shown by Figures 8A-B was determined according to embodiments herein, thus determined by using a real object corresponding to, for example, the real object 420.The real object was scanned by the same system and setup that subsequently was used to scan the other real object resulting in the 3D image data visualized by the imaged object 835a of Figure 8A.

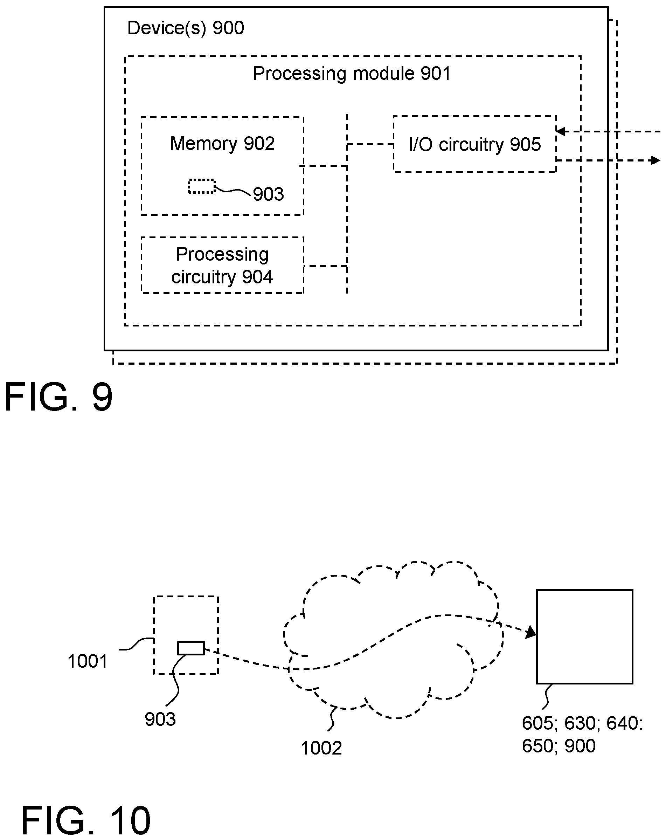

**Figure 9** is a schematic block diagram for illustrating embodiments of one or more devices 900, i.e. device(s) 900, that may correspond to devices(s) already mentioned in the above for performing embodiments herein, such as for performing the method and/or actions described above in relation to Figure 7.

The device(s) 900 may e.g. correspond to any one of the 3D imaging system 605 or some device(s) part thereof or external from the system, for example the camera 630 and/or the computing device 640 and/or the computer cloud 650. As realized by the skilled person, some embodiments of the method comprise actions that may be performed distributed by multiple devices configured to perform the actions. It should also be realized that the device(s) 900 performing the method according to some embodiment may do so at some later occasion than when any imaging system was operated and provided the 3D image data. Hence, the method may be performed by device(s) that are remote in time and space from the imaging system and the imaging as such. Output from the imaging system may for example be uploaded to a server or computer cloud, for example the computer cloud 650, comprising computing device(s) configured to perform the method, or from where computing device(s) for performing the method obtains the image data. However, it may be preferred with device(s) configured to perform the method that are part of or at least do this in connection with the involved imaging system and the imaging since this may enable more reliable, simpler and faster execution, and the transform determined by the method is thereafter nevertheless to be used on subsequent 3D image data resulting from scanning by the same imaging system.

The schematic block diagram is for illustrating embodiments regarding how the device(s) 900 may be configured to perform the method and actions discussed above in relation to Figure 7. Hence, the device(s) 900 is for determining a transform having a de-skewing effect on 3D image data resulting from scanning by a 3D imaging system, as described above for the method.

The device(s) 900 may comprise processing module(s) 901, such as processing means, one or more hardware modules, including e.g. one or more processing circuits, circuitry, such as processors, and/or one or more software modules for performing said method and/or actions.

The device(s) 900 may further comprise memory/ies 902 that may comprise, such as contain or store, computer program(s) 903. The computer program(s) 903 comprises 'instructions' or 'code' directly or indirectly executable by the device(s) 900, respectively, to perform said method and/or actions. The memory/ies 902 may comprise one or more memory units and may further be arranged to store data, such as configurations, data and/or values, involved in or for performing functions and actions of embodiments herein.

Moreover, respective device 900 may comprise processing circuitry 904 involved in processing and e.g. encoding data, as exemplifying hardware module(s) and may comprise or correspond to one or more processors or processing circuits. The processing module(s) 901 may comprise, e.g. 'be embodied in the form of' or 'realized by' such processing circuitry 904. In these embodiments, the memory 902 may comprise the computer program(s) 903 respectively executable by processing circuitry 904, whereby respective device 900 is operative, or configured, to perform said method and/or actions thereof.

Typically the device(s) 900, e.g. the processing module(s) 901, comprises Input/Output (I/O) module(s) 905, configured to be involved in, e.g. by performing, any communication to and/or from other units and/or devices, such as sending and/or receiving information to and/or from other devices. The I/O module(s) 905 may be exemplified by obtaining, e.g. receiving, module(s) and/or providing, e.g. sending, module(s), when applicable.

Further, in some embodiments, the device(s) 900, e.g. the processing module(s) 901, comprises one or more of obtaining module(s), detecting module(s), scanning modules(s), application module(s), transforming module(s), adjusting module(s), determining module(s), scanning module(s), as exemplifying hardware and/or software module(s) for carrying out actions of embodiments herein. These modules may be fully or partly implemented by processing circuitry 904.

### Hence:

The device(s) 900, and/or the processing module(s) 901, and/or processing circuitry 904, and/or the I/O module(s) 905, and/or the obtaining module(s), is/are operative, or configured, to, obtain said 3D image data resulting from the scanning by the 3D imaging system of said planar real surfaces.

The device(s) 900, and/or the processing module(s) 901, and/or processing circuitry 904, and/or the I/O module(s) 905, and/or the detecting module(s), is/are operative, or configured, to, detect said planar imaged surfaces in the 3D image data.

The device(s) 900, and/or the processing module(s) 901, and/or processing circuitry 904, and/or the I/O module(s) 905, and/or the determining module(s), is/are operative, or configured, to, determine the transform based on said detected planar imaged surfaces and said one or more angular relationships between the planar real surfaces.

In some embodiments, the device(s) 900, and/or the processing module(s) 901, and/or processing circuitry 904, and/or the I/O module(s) 905, and/or the obtaining module(s) and/or the application module(s), is/are operative, or configured, to, obtain said adjustable transform, iteratively apply the transform on the detected planar imaged surfaces described in the coordinate system of said 3D image data and adjust the transform until said match occur.

In some embodiments, the device(s) 900, and/or the processing module(s) 901, and/or processing circuitry 904, and/or the I/O module(s) 905, and/or the obtaining module(s) and/or the scanning module(s), is/are operative, or configured, to scan, by the 3D imaging system, said planar real surfaces.

**Figure 10** is a schematic drawing illustrating some embodiments relating to the computer program(s) 903 and carriers thereof to cause said device(s) 900 discussed above to perform said method and actions.

The computer program(s) 903 comprises instructions that when executed by processing circuitry 904 and/or the processing module(s) 901, cause the device(s) 900 to perform as described above. In some embodiments there is provided one or more carriers, that is carrier(s), or more specifically data carrier(s), such as computer program product(s), comprising the computer program(s). Respective carrier(s) may be one of an electronic signal, an optical signal, a radio signal, and a computer readable storage medium, e.g. a computer readable storage medium 1001 as schematically illustrated in the figure. The computer program(s) 903 may thus be stored on the computer readable storage medium 1001. By carrier may be excluded a transitory, propagating signal and the data carrier may correspondingly be named non-transitory data carrier. Non-limiting examples of the data carrier being a computer readable storage medium is a memory card or a memory stick, a disc storage medium or a mass storage device that typically is based on hard drive(s) or Solid State Drive(s) (SSD). The computer readable storage medium 1001 may be used for storing data accessible over a computer network 1002, e.g. the Internet or a Local Area Network (LAN). The computer program(s) 903 may furthermore be provided as pure computer program(s) or comprised in a file or files. The file or files may be stored on the computer readable storage medium 1001 and for example be available through download, for example over the computer network 1002 as indicated in the figure, such as via a server. The server may be a web or File Transfer Protocol (FTP) based server, or similar. The file or files may be executable files for direct or indirect download to and execution on said device(s) to make it perform as described above, e.g. by execution by processing circuitry 904. The file or files may also or alternatively be for intermediate download and compilation involving the same or another processor(s) to make them executable before further download and execution causing said device(s) 900 to perform as described above.

Note that any processing module(s) and circuit(s) mentioned in the foregoing may be implemented as a software and/or hardware module, e.g. in existing hardware and/or as an Application Specific Integrated Circuit (ASIC), a Field-Programmable Gate Array (FPGA) or the like. Also note that any hardware module(s) and/or circuit(s) mentioned in the foregoing may e.g. be included in a single ASIC or FPGA, or be distributed among several separate hardware components, whether individually packaged or assembled into a System-on-a-Chip (SoC).

Those skilled in the art will also appreciate that the modules and circuitry discussed herein may refer to a combination of hardware modules, software modules, analogue and digital circuits, and/or one or more processors configured with software and/or firmware, e.g. stored in memory, that, when executed by the one or more processors may make the device(s), sensor(s) etc. to be configured to and/or to perform the above-described methods and actions.

Identification by any identifier herein may be implicit or explicit. The identification may be unique in a certain context, e.g. for a certain computer program or program provider.

As used herein, the term "memory" may refer to a data memory for storing digital information, typically a hard disk, a magnetic storage, medium, a portable computer diskette or disc, flash memory, Random Access Memory (RAM) or the like. Furthermore, the memory may be an internal register memory of a processor.

Also note that any enumerating terminology such as first device, second device, first surface, second surface, etc., should as such be considered non-limiting and the terminology as such does not imply a certain hierarchical relation. Without any explicit information in the contrary, naming by enumeration should be considered merely a way of accomplishing different names.

As used herein, the expression "configured to" may mean that a processing circuit is configured to, or adapted to, by means of software or hardware configuration, perform one or more of the actions described herein.

As used herein, the terms "number" or "value" may refer to any kind of digit, such as binary, real, imaginary or rational number or the like. Moreover, "number" or "value" may be one or more characters, such as a letter or a string of letters. Also, "number" or "value" may be represented by a bit string.

As used herein, the expression "may" and "in some embodiments" has typically been used to indicate that the features described may be combined with any other embodiment disclosed herein.

In the drawings, features that may be present in only some embodiments are typically drawn using dotted or dashed lines.

When using the word "comprise" or "comprising" it shall be interpreted as nonlimiting, i.e. meaning "consist at least of".

The embodiments herein are not limited to the above described embodiments. Various alternatives, modifications and equivalents may be used. Therefore, the above embodiments should not be taken as limiting the scope of the present disclosure, which is defined by the appended claims.

## Claims

1. Computer implemented method for determining a transform having a de-skewing effect on 3D image data resulting from scanning by a 3D imaging system (605), wherein the method comprises:
- obtaining (701) 3D image data resulting from scanning by the 3D imaging system (605) of planar real surfaces (322a-c; 422a-c; 522a-c) that at least during the scanning were non-parallel with constant one or more angular relationships between each other, whereby said 3D image data comprises planar imaged surfaces (327a-c) corresponding to said planar real surfaces (322a-c; 422a-c; 522a-c);
- detecting (702) the planar imaged surfaces (327) in the 3D image data;
**characterised in that** the method further comprises:
- determining (703) the transform based on the detected planar imaged surfaces (327a-c) and said one or more angular relationships between the planar real surfaces (322a-c; 422a-c; 522a-c), such that the transform, when applied to a description of the detected imaged surfaces (327a-c) in coordinates of said 3D data, results **in that** angular relationships between the detected imaged surfaces (327a-c) match said angular relationships between the planar real surfaces (322a-c; 422a-c; 522a-c),
wherein said determining action comprises:
- obtaining (703a) an adjustable transform for operation on input 3D image data coordinates and thereby transform them to output 3D image data coordinates, wherein adjustment of the transform results in change of a de-skewing effect provided by the transform, and
- iteratively (703b) applying the transform on the detected planar imaged surfaces (327a-c) described in the coordinate system of said 3D image data and adjusting the transform until said match occurs.

2. The method as claimed in claim 1, wherein iteratively applying and adjusting the transform involves application of a non-linear solver on a function based on differences between respective angular relationships of the real surfaces and the transformed respective corresponding angular relationships between the imaged surfaces.

3. The method as claimed in any one of claims 1-2, wherein the planar real surfaces (322a-c) and planar imaged surfaces (327a-c) are represented by their normals, respectively, and respective angular relationships is represented by a respective relation between the normals of the surfaces that the respective angular relationships relate to.

4. The method as claimed in any one of claims 1-3, wherein said obtaining action comprises:
- scanning (701a), by the 3D imaging system (605), said planar real surfaces (322a-c).

5. The method as claimed in any one of claims 1-4, wherein said planar real surfaces (322a-c; 422a-c; 522a-c) are part of one and the same real object (320; 420; 520).

6. The method as claimed in claim 5, wherein said real object (520) is asymmetrical.

7. One or more devices (605; 630; 640: 650; 900) for determining a transform having a de-skewing effect on 3D image data resulting from scanning by a 3D imaging system (605), wherein said on or more devices are configured to:
obtain (701) 3D image data resulting from scanning by the 3D imaging system (605) of planar real surfaces (322a-c; 422a-c; 522a-c) that at least during the scanning were non-parallel and with constant one or more angular relationships between each other, whereby said 3D image data comprises planar imaged surfaces (327a-c) corresponding to said planar real surfaces (322a-c; 422a-c; 522a-c);
detect (702) the planar imaged surfaces (327) in the 3D image data; **characterised in that** said one or more devices are further configured to:
determine (703) the transform based on the detected planar imaged surfaces (327a-c) and said one or more angular relationships between the planar real surfaces (322a-c; 422a-c; 522a-c), such that the transform, when applied to a description of the detected imaged surfaces (327a-c) in coordinates of said 3D data, results **in that** angular relationships between the detected imaged surfaces (327a-c) match said angular relationships between the planar real surfaces (322a-c; 422a-c; 522a-c),
wherein said one or more devices are configured for the determining (703) by:
- obtaining (703a) an adjustable transform for operation on input 3D image data coordinates and thereby transform them to output 3D image data coordinates, wherein adjustment of the transform results in change of a de-skewing effect provided by the transform, and
- iteratively (703b) applying the transform on the detected planar imaged surfaces (327a-c) described in the coordinate system of said 3D image data and adjusting the transform until said match occurs.

8. One or more computer programs (1003) comprising instructions that when executed by one or more processors causes said one or more devices according to claim 7 to perform the method according to any one of claims 1-6.

9. One or more carriers comprising the one or more computer programs (1003) according to claim 8, wherein the one or more carriers are one or more of the following: electronic signal, optical signal, radio signal or computer readable storage medium (1101).

## Patentansprüche

1. Computerimplementiertes Verfahren zur Bestimmung einer Transformation mit Entzerrungseffekt auf 3D-Bilddaten aus der Abtastung durch ein 3D-Bildgebungssystem (605), wobei das Verfahren Folgendes umfasst:
- Erhalten (701) von 3D-Bilddaten aus der Abtastung durch das 3D-Bildgebungssystem (605) von planaren realen Flächen (322a-c; 422a-c; 522a-c), die zumindest während der Abtastung nicht parallel waren und eine oder mehrere konstante Winkelbeziehungen zueinander aufwiesen, wobei die 3D-Bilddaten planare abgebildete Flächen (327a-c) umfassen, die den planaren realen Flächen (322a-c; 422a-c; 522a-c) entsprechen;
- Detektieren (702) der planaren abgebildeten Flächen (327) in den 3D-Bilddaten; **dadurch gekennzeichnet, dass** das Verfahren weiter Folgendes umfasst:
- Bestimmen (703) der Transformation auf der Grundlage von den detektierten planaren abgebildeten Flächen (327a-c) und den einen oder mehreren Winkelbeziehungen zwischen den planaren realen Flächen (322a-c; 422a-c; 522a-c), derart, dass die Transformation, wenn sie auf eine Beschreibung der detektierten abgebildeten Flächen (327a-c) in Koordinaten der 3D-Daten angewandt wird, bewirkt, dass Winkelbeziehungen zwischen den detektierten abgebildeten Flächen (327a-c) mit den Winkelbeziehungen zwischen den planaren realen Flächen (322a-c; 422a-c; 522a-c) übereinstimmen,
wobei die Handlung des Bestimmens Folgendes umfasst:
- Erhalten (703a) einer anpassbaren Transformation zur Anwendung auf Eingabe-3D-Bilddatenkoordinaten und dadurch zum Transformieren derselben in Ausgabe-3D-Bilddatenkoordinaten, wobei die Anpassung der Transformation in einer Änderung eines von der Transformation bereitgestellten Entzerrungseffekts resultiert, und
- iteratives (703b) Anwenden der Transformation auf die detektierten planaren abgebildeten Flächen (327a-c), die im Koordinatensystem der 3D-Bilddaten beschrieben sind, und Anpassen der Transformation, bis die Übereinstimmung eintritt.

2. Verfahren nach Anspruch 1, wobei das iterative Anwenden und Anpassen der Transformation die Anwendung eines nichtlinearen Solvers auf eine Funktion umfasst, die auf der Grundlage von Unterschieden zwischen jeweiligen Winkelbeziehungen der realen Flächen und den transformierten jeweiligen entsprechenden Winkelbeziehungen zwischen den abgebildeten Flächen gebildet ist.

3. Verfahren nach einem der Ansprüche 1-2, wobei die planaren realen Flächen (322a-c) und die planaren abgebildeten Flächen (327a-c) jeweils durch ihre Normalenvektoren dargestellt sind, und jeweilige Winkelbeziehungen jeweils durch eine jeweilige Beziehung zwischen den Normalenvektoren der Flächen dargestellt sind, auf die sich die jeweiligen Winkelbeziehungen beziehen.

4. Verfahren nach einem der Ansprüche 1-3, wobei die Handlung des Erhaltens Folgendes umfasst:
- Abtasten (701a) der planaren realen Flächen (322a-c) durch das 3D-Bildgebungssystem (605).

5. Verfahren nach einem der Ansprüche 1-4, wobei die planaren realen Flächen (322a-c; 422a-c; 522a-c) Teil eines und desselben realen Objekts (320; 420; 520) sind.

6. Verfahren nach Anspruch 5, wobei das reale Objekt (520) asymmetrisch ist.

7. Eine oder mehrere Vorrichtungen (605; 630; 640: 650; 900) zur Bestimmung einer Transformation mit Entzerrungseffekt auf 3D-Bilddaten aus der Abtastung durch ein 3D-Bildgebungssystem (605), wobei die eine oder die mehreren Vorrichtungen dazu ausgebildet sind:
3D-Bilddaten aus der Abtastung durch das 3D-Bildgebungssystem (605) von planaren realen Flächen (322a-c; 422a-c; 522a-c) zu erhalten (701), die zumindest während der Abtastung nicht parallel waren und eine oder mehrere konstante Winkelbeziehungen zueinander aufwiesen, wobei die 3D-Bilddaten planare abgebildete Flächen (327a-c) umfassen, die den planaren realen Flächen (322a-c; 422a-c; 522a-c) entsprechen;
die planaren abgebildeten Flächen (327) in den 3D-Bilddaten zu detektieren (702); **dadurch gekennzeichnet, dass** die eine oder die mehreren Vorrichtungen weiter dazu ausgebildet sind:
die Transformation auf der Grundlage von den detektierten planaren abgebildeten Flächen (327a-c) und den einen oder mehreren Winkelbeziehungen zwischen den planaren realen Flächen (322a-c; 422a-c; 522a-c) zu bestimmen (703), derart, dass die Transformation, wenn sie auf eine Beschreibung der detektierten abgebildeten Flächen (327a-c) in Koordinaten der 3D-Daten angewandt wird, bewirkt, dass Winkelbeziehungen zwischen den detektierten abgebildeten Flächen (327a-c) mit den Winkelbeziehungen zwischen den planaren realen Flächen (322a-c; 422a-c; 522a-c) übereinstimmen,
wobei die eine oder die mehreren Vorrichtungen für das Bestimmen (703) ausgebildet sind durch:
- Erhalten (703a) einer anpassbaren Transformation zur Anwendung auf Eingabe-3D-Bilddatenkoordinaten und dadurch zum Transformieren derselben in Ausgabe-3D-Bilddatenkoordinaten, wobei die Anpassung der Transformation in einer Änderung eines von der Transformation bereitgestellten Entzerrungseffekts resultiert, und
- iteratives (703b) Anwenden der Transformation auf die detektierten planaren abgebildeten Flächen (327a-c), die im Koordinatensystem der 3D-Bilddaten beschrieben sind, und
Anpassen der Transformation, bis die Übereinstimmung eintritt.

8. Ein oder mehrere Computerprogramme (1003), die Anweisungen umfassen, die, wenn sie von einem oder mehreren Prozessoren ausgeführt werden, die eine oder die mehreren Vorrichtungen nach Anspruch 7 veranlassen, das Verfahren nach einem der Ansprüche 1-6 auszuführen.

9. Ein oder mehrere Träger, umfassend das eine oder die mehreren Computerprogramme (1003) nach Anspruch 8, wobei es sich bei dem oder den Trägern um eines oder mehrere der folgenden handelt: elektronisches Signal, optisches Signal, Funksignal oder computerlesbares Speichermedium (1101).

## Revendications

1. Procédé mis en œuvre par ordinateur pour déterminer une transformée avec un effet de réalignement sur des données d'image 3D provenant d'un balayage par un système d'imagerie 3D (605), dans lequel le procédé comprend :
- l'obtention (701) de données d'image 3D résultant d'un balayage par le système d'imagerie 3D (605) de surfaces réelles planes (322a-c ; 422a-c ; 522a-c) qui, au moins pendant le balayage, étaient non parallèles avec une ou plusieurs relations angulaires constantes entre elles, moyennant quoi lesdites données d'image 3D comprennent des surfaces imagées planes (327a-c) correspondant auxdites surfaces réelles planes (322a-c ; 422a-c ; 522a-c) ;
- la détection (702) des surfaces imagées planes (327) dans les données d'image 3D ;
**caractérisé en ce que** le procédé comprend en outre :
- la détermination (703) de la transformée sur la base des surfaces imagées planes détectées (327a-c) et desdites une ou plusieurs relations angulaires entre les surfaces réelles planes (322a-c ; 422a-c ; 522a-c), de telle sorte que la transformée, lorsqu'elle est appliquée à une description des surfaces imagées détectées (327a-c) en coordonnées desdites données 3D, aboutit à ce que des relations angulaires entre les surfaces imagées détectées (327a-c) correspondent auxdites relations angulaires entre les surfaces réelles planes (322a-c ; 422a-c ; 522a-c),
dans lequel ladite action de détermination comprend :
- l'obtention (703a) d'une transformée ajustable pour opérer sur des coordonnées d'entrée de données d'image 3D et ainsi les transformer en coordonnées de sortie de données d'image 3D, dans lequel un ajustement de la transformée entraîne une modification d'un effet de réalignement fourni par la transformée, et
- l'application itérative (703b) de la transformée sur les surfaces imagées planes détectées (327a-c) décrites dans le système de coordonnées desdites données d'image 3D et un ajustement de la transformée jusqu'à ce que ladite correspondance se produise.

2. Procédé selon la revendication 1, dans lequel l'application itérative et l'ajustement de la transformée impliquent une application d'un solveur non linéaire sur une fonction basée sur des différences entre des relations angulaires respectives des surfaces réelles et les relations angulaires transformées respectives correspondantes entre les surfaces imagées.

3. Procédé selon l'une quelconque des revendications 1 à 2, dans lequel les surfaces réelles planes (322a-c) et les surfaces imagées planes (327a-c) sont représentées par leurs normales, respectivement, et les relations angulaires respectives sont représentées par une relation respective entre les normales des surfaces auxquelles se rapportent les relations angulaires respectives.

4. Procédé selon l'une quelconque des revendications 1 à 3, dans lequel ladite action d'obtention comprend :
- le balayage (701a), par le système d'imagerie 3D (605), desdites surfaces réelles planes (322a-c).

5. Procédé selon l'une quelconque des revendications 1 à 4, dans lequel lesdites surfaces réelles planes (322a-c ; 422a-c ; 522a-c) font partie d'un seul et même objet réel (320 ; 420 ; 520).

6. Procédé selon la revendication 5, dans lequel ledit objet réel (520) est asymétrique.

7. Un ou plusieurs dispositifs (605 ; 630 ; 640 ; 650 ; 900) pour déterminer une transformée avec un effet de réalignement sur des données d'image 3D résultant d'un balayage par un système d'imagerie 3D (605), dans lesquels lesdits un ou plusieurs dispositifs sont configurés pour :
obtenir (701) des données d'image 3D résultant d'un balayage par le système d'imagerie 3D (605) de surfaces réelles planes (322a-c ; 422a-c ; 522a-c) qui, au moins pendant le balayage, étaient non parallèles et avec une ou plusieurs relations angulaires constantes entre elles, moyennant quoi lesdites données d'image 3D comprennent des surfaces imagées planes (327a-c) correspondant auxdites surfaces réelles planes (322a-c ; 422a-c ; 522a-c) ;
détecter (702) les surfaces imagées planes (327) dans les données d'image 3D ;
**caractérisés en ce que** lesdits un ou plusieurs dispositifs sont configurés en outre pour :
d éterminer (703) la transformée sur la base des surfaces imagées planes détectées (327a-c) et desdites une ou plusieurs relations angulaires entre les surfaces réelles planes (322a-c ; 422a-c ; 522a-c), de telle sorte que la transformée, lorsqu'elle est appliquée à une description des surfaces imagées détectées (327a-c) en coordonnées desdites données 3D, aboutit à ce que des relations angulaires entre les surfaces imagées détectées (327a-c) correspondent auxdites relations angulaires entre les surfaces réelles planes (322a-c ; 422a-c ; 522a-c),
d ans lesquels lesdits un ou plusieurs dispositifs sont configurés pour la détermination (703) par :
- l'obtention (703a) d'une transformée ajustable pour opérer sur des coordonnées d'entrée de données d'image 3D et ainsi les transformer en coordonnées de sortie de données d'image 3D, dans lesquel un ajustement de la transformée entraîne une modification d'un effet de réalignement fourni par la transformée, et
- l'application itérative (703b) de la transformée sur les surfaces imagées planes détectées (327a-c) décrites dans le système de coordonnées desdites données d'image 3D et un ajustement de la transformée jusqu'à ce que ladite correspondance se produise.

8. Un ou plusieurs programmes d'ordinateur (1003) comprenant des instructions qui, lorsqu'elles sont exécutées par un ou plusieurs processeurs, amènent lesdits un ou plusieurs dispositifs selon la revendication 7 à mettre en œuvre le procédé selon l'une quelconque des revendications 1 à 6.

9. Un ou plusieurs supports comprenant les un ou plusieurs programmes d'ordinateur (1003) selon la revendication 8, dans lequel ou lesquels les un ou plusieurs supports sont un ou plusieurs éléments parmi les éléments suivants : un signal électronique, un signal optique, un signal radio ou un support de stockage lisible par ordinateur (1101).
